(19) Europäisches Patentamt
European Patent Office
Office européen des brevets

(11) Numéro de publication: 0 002 641
B1

(12) FASCICULE DE BREVET EUROPEEN

(21) Numéro de dépôt: 78400228.9

(22) Date de dépôt: 12.12.78

(51) Int. Cl.³: C 08 G 63/62

# (54) Procédé perfectionné de synthèse de polycarbonates aliphatiques hydroxytéléchéliques par phosgénation directe et produits ainsi obtenus

(30) Priorité: 15.12.77 FR 7737911

(43) Date de publication de la demande: 27.06.79 Bulletin 79/13

(45) Mention de la délivrance du brevet: 01.10.80 Bulletin 80/20

(84) Etats contractants désignés: BE CH DE GB LU NL

(56) Documents cités: FR - A - 2 106 532

(73) Titulaire: SOCIETE NATIONALE DES POUDRES ET EXPLOSIFS
12, quai Henri IV
F - 75181 PARIS CEDEX 04 (FR)

(72) Inventeur: Mondet, Jean-Claude
8, domaine du Guichet
F - 91810 Vert le Grand (FR)
Piteau, Marc
38, avenue de Ballancourt
F - 91710 Itteville (FR)
Senet, Jean-Pierre
19, Chemin Latéral Livry sur Seine
F - 77000 Melun (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 002 641 B1

Procédé perfectionné de synthèse de polycarbonates aliphatiques hydroxytéléchéliques par phosgénation directe et produits ainsi obtenus

La présente invention concerne un procédé perfectionné de synthèse de polycarbonates aliphatiques ou cycloaliphatiques, linéaires ou ramifiés, hydroxytéléchéliques par phosgénation directe d'un ou plusieurs polyols lorsque tout ou partie desdits polyols présente une structure chimique dans laquelle un même atome de carbone est porteur d'au moins deux groupes méthylol —$CH_2OH$.

La synthèse de polycarbonates hydroxytéléchéliques par réaction du phosgène ou d'un bischloroformiate sur un diol est bien connue de l'homme de métier. Cette réaction s'effectue en général dans un milieu solvant en présence d'un accepteur d'acide qui peut être, soit une base minérale, soit une base organique azotée comme une amine tertiaire. Une telle synthèse est décrite par exemple dans le brevet français 1 177 056. Néanmoins lorsque l'on cherche à obtenir selon cette technique des polycarbonates aliphatiques ou cyclo-aliphatiques hydroxytéléchéliques, on se heurte à un certain nombre de difficultés dues notamment au fait qu'il est difficile par cette technique d'obtenir des polycarbonates linéaires hydroxytéléchéliques ayant une fonctionnalité en groupes hydroxy OH égale à 2 et que, de surcroît, il reste dans le polycarbonate des traces de solvants et d'accepteurs d'acide qui peuvent être gênantes si l'on veut transformer ledit polycarbonate en polyuréthanne par réaction avec un diisocyanate. Par ailleurs, la phosgénation, selon cette technique, de diols présentant une structure chimique dans laquelle un même atome de carbone est porteur de deux groupes méthylol, comme c'est le cas pour les diols à structure néopentylique tels que le néopentylglycol, est difficile car ce genre de diols a tendance à former en cours de phosgénation un carbonate cyclique qui se décarboxyle et conduit à un éther cyclique selon le schéma réactionnel:

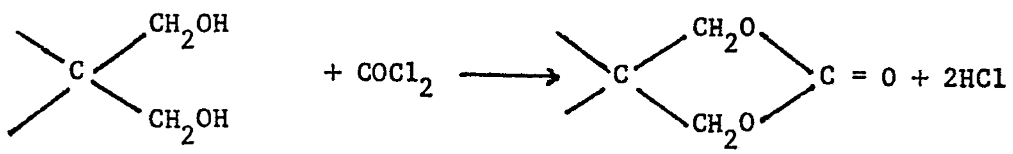
(1)

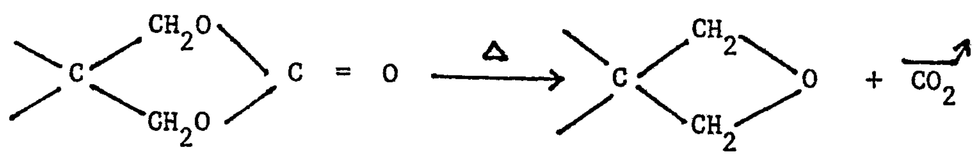
(2)

Ces réactions parasites rendent difficile le réglage de la masse molaire du polycarbonate final et font baisser le rendement de la réaction.

On a alors cherché à synthétiser des polycarbonates hydroxytéléchéliques par transestérification entre un diol et un carbonate d'alkyle comme le carbonate d'éthyle ou d'aryle comme le carbonate de phényle. Une telle transestérification est par exemple décrite dans le brevet français 1 152 157. Afin d'obtenir des polycarbonates hydroxytéléchéliques très réactifs vis à vis des isocyanates, on a cherché à augmenter leur fonctionnalité en groupes OH en synthétisant des polycarbonates hydroxytéléchéliques ramifiés par transestérification d'un mélange de diols ou de triols aliphatiques ou cycloaliphatiques. De telles transestérifications sont par exemple décrites dans les brevets français 2 010 777 et 2 037 006. Néanmoins, l'obtention de polycarbonates aliphatiques ou cycloaliphatiques hydroxytéléchéliques par transestérification présente deux inconvénients majeurs:

— cette technique est chère en raison des grandes quantités de carbonate d'alkyle ou d'aryle consommées et de la nécessité de recycler l'alcool ou le phénol formé,
— il reste toujours dans le polycarbonate des traces d'alcool ou de phénol provenant de l'agent de transestérification, or ces alcools ou ces phénols provoquent un jaunissement à long terme du polycarbonate et réagissent avec les isocyanates en cas de transformation du polycarbonate en polyuréthanne.

On a alors cherché à obtenir des polycarbonates aliphatiques ou cycloaliphatiques hydroxytéléchéliques de bonne fonctionnalité et purs par phosgénation directe, sans accepteurs d'acide et de préférence sans solvant, d'un mélange de diols et de triols; cette technique donne des résultats satisfaisants sauf dans les cas où le triol possède une structure chimique dans laquelle un même atome de carbone est porteur d'au moins deux groupes méthylol, comme c'est le cas par exemple pour le triméthylol propane, et oú les réactions parasites (1) et (2) mentionnées plus haut se produisent avec les inconvénients qui en découlent.

Il résulte de l'état de la technique qui vient d'être exposé ci-dessus, qu'il est intéressant pour l'homme de métier d'obtenir par phosgénation directe, sans accepteur d'acide et de préférence sans solvant, des polycarbonates aliphatiques ou cycloaliphatiques, mais qu'une telle phosgénation est malaisée lorsque tout ou partie desdits polyols présente une structure chimique dans laquelle un même

atome de carbone est porteur d'au moins deux groupes méthylol.

L'objet de la présente invention concerne précisément un procédé de synthèse de polycarbonates hydroxytéléchéliques aliphatiques ou cycloaliphatiques, linéaires ou ramifiés de masse molaire comprise entre 500 et 5000, par phosgénation directe d'un ou plusieurs polyols aliphatiques ou cycloaliphatiques lorsque tout ou partie desdits polyols présente une structure chimique dans laquelle un même atome de carbone est porteur d'au moins deux groupes méthylol.

Selon l'invention, la demanderesse a découvert que dans ce type de phosgénation la formation des réactions parasites 1 et 2 ci-dessus mentionnées peut être évitée à condition d'introduire les réactifs de façon telle que lesdits polyols présentant une structure chimique dans laquelle un même atome de carbone est porteur d'au moins deux groupes méthylol, se trouvent toujours soit en présence exclusivement de fonctions chloroformiates, soit en présence d'un excès de phosgène d'au moins 10% en moles par rapport à la quantité stoechiométrique nécessaire à la transformation de toutes les fonctions OH desdits polyols en fonctions chloroformiates.

Par polyols aliphatiques ou cycloaliphatiques on entend au sens de la présente invention tous les alcanols comportant au moins 2 atomes de carbone et 2 ou 3 fonction hydroxy OH par molécule. On peut ainsi citer les diols suivants: le butane diol-1,4, le butane diol-1,3, le pentane diol-1,5, l'hexane diol-1,6, le triméthyl-2,2,4 hexane diol-1,6, le di(éthylène glycol), le tri(éthylène glycol), le tétraméthyl-2,2,4,4 cyclobutane diol-1,3, cyclohexane diol-1,4 le cyclohexane diméthanol-1,4.

Comme polyols répondant à la définition générale précédente et possédant une structure chimique dans laquelle un même atome de carbone est porteur d'au moins deux groupes méthylol (ces polyols étant dans la suite du brevet désignés par "polyols présentant des groupes méthylol adjacents"), on peut citer le néopentylglycol, le triméthylol-1,1,1 propane, le triméthylol-1,1,1 éthane.

Selon une première variante de mise en oeuvre de l'invention, on introduit, dans la charge de phosgène nécessaire pour l'ensemble de la réaction, les polyols à groupes méthylol adjacents, éventuellement dissouts dans une partie des autres polyols et/ou dans un solvant inerte vis à vis du phosgène et des polycarbonates. La réaction de formation des chloroformiates se fait préférentiellement entre —10°C et +60°C. Lorsque tous les polyols à groupes méthylol adjacents sont transformés en chloroformiates, on introduit le restant des autres polyols et on termine la réaction de condensation en élevant la température jusqu'à +150°C au maximum. Il va de soi que cette première variante ne peut concerner que des mélanges de polyols dans lesquels seulement une partie desdits polyols sont des polyols à groupes méthylol adjacents.

Selon une seconde variante de mise en oeuvre de l'invention, on fait réagir une partie des polyols éventuellement dissouts dans un solvant avec le phosgéne à basse température de manière à former la quantité théorique nécessaire de chloroformiates, on élimine le phosgène en excès et on ajoute le restant de polyols pour obtenir le polycarbonate désiré. La réaction de formation des chloroformiates se fait préférentiellement entre —10 et +20°C. Si l'on se trouve en présence d'un mélange de polyols dont seulement une partie présente des groupes méthylol adjacents, on cherchera dans toute la mesure du possible à fabriquer les chloroformiates à partir des polyols ne présentant pas de groupes méthylol adjacents. Dans le cas où l'on fabriquerait les chloroformiates à partir de polyols présentant des groupes méthylol adjacents on veillerait à ce qu'il y ait toujours en excès de phosgène d'au moins 10% en moles et préférentiellement d'au moins 15% en moles par rapport à la quantité stoechiométrique nécessaire à la transformation de toutes les fonctions OH desdits polyols en fonctions chloroformiates. D'une manière générale la formation des chloroformiates s'effectue préférentiellement sous pression atmosphérique tandis que la transformation en polycarbonates s'effectue sous pression réduite entre 10 mm de mercure et la pression atmosphérique.

La seconde variante de mise en oeuvre de l'invention est la variante préférée par la demanderesse, car c'est la variante qui permet le meilleur réglage de la masse molaire du polycarbonate final. En effet, la première variante suppose un dosage exact du phosgène, or il est difficile, à l'échelle industrielle, de mesurer une quantité de phosgène avec une erreur relative inférieure à 5% et cette erreur se répercute sur la masse molaire du polycarbonate final. Dans la seconde variante au contraire le réglage de la masse molaire du polycarbonate final se fait d'une part par pesée des polyols à phosgéner et d'autre part par pesée des polyols à ajouter aux chloroformiates mais la quantité de phosgène n'est pas critique du moment qu'elle est en excès par rapport à la quantité stoechiométrique puisque l'excès de phosgène sera éliminé et ainsi, par des pesées précises de polyols, il est possible de règler de façon très précise la masse molaire du polycarbonate final.

Selon une réalisation préférée par la demanderesse, la seconde variante de mise en oeuvre de l'invention est utilisée pour synthétiser des polycarbonates hydroxytéléchéliques par phosgénation directe d'un triol tel que le triméthylol-1,1,1 propane ou le triméthylol-1,1,1 éthane et d'un mélange de diols dans des proportions conformes à celles indiquées dans la demande de brevet français 76.37196 au nom de la demanderesse de manière à obtenir des polycarbonates aliphatiques ou cycloaliphatiques triols liquides, Dans cette réalisation préférée on transforme d'abord la moitié desdits diols en bischloroformiates, on élimine le phosgène en excès, et on condense lesdits bischloroformiates sur ledit triol en mélange avec le restant des diols. On a observé que certains polycarbonates triols obtenus selon cette réalisation préférée, sont particulièrement réactifs vis à vis d'acides insaturés comme l'acide acrylique ou méthacrylique.

L'invention sera mieux comprise à l'aide des exemples de mise en oeuvre donnés ci-après à titre non limitatif.

Exemple 1

Cet exemple concerne la préparation d'un polycarbonate aliphatique triol liquide selon la variante préférée de mise en oeuvre de l'invention.

On mélange à environ 30°C, 423,9 g de butane diol-1,4 et 447,72 g d'hexane diol-1,6. On prélève 90 g de ce mélange pour y dissoudre 107,2 g de triméthylol-1,1,1 propane. Le restant du mélange de diols est porté à 60°C afin d'obtenir un mélange homogène. L'introduction de 50 g de phosgène dans le milieu permet d'abaisser la température vers 35°C. Après avoir introduit 300 g de phosgène la température peut être abaissée aux environs de 10°C. Lorsque la totalité du phosgène a été introduite, soit 842 g au total, la température du milieu est de 0°C. Cette température est maintenue pendant une heure. A ce stade la totalité du phosgène introduit a été consommée par les diols. On additionne ensuite le triméthylolpropane dissout dans les diols et on laisse le mélange pendant 12 heures sous bullage d'azote. On chauffe ensuite pendant 6 heures à 80°C sous un vide de 100 mm de Hg et sous atmosphère d'azote. On obtient ainsi 1163 g d'une huile incolore dont les caractéristiques sont les suivantes:

— taux d'hydroxyle: 2,2 éq OH/kg (calculé 2,0)
— taux de chlore total: 0,55%
— taux de chlore hydrolysable: nul.

Le rendement par rapport à la théorie est de 96,5%.

Exemple 2

Cet exemple illustre une autre réalisation de la variante préférée de mise en oeuvre de l'invention.

On ajoute goutte à goutte un mélange de 62,3 g (0,69 mole) de butane diol-1,4 et 65,7 g (0,56 mole) d'hexane diol-1,6 à 300 g (3,03 moles) de phosgène liquide en maintenant la température entre −5°C et 0°C. Après une heure de réaction à 0°C, l'excès de phosgène est éliminé par balayage à l'azote.

On introduit lentement dans le milieu réactionnel maintenu à température ambiante, un mélange de 49,7 g (0,37 mole) de triméthylolpropane, 62,3 g (0,69 mole) de butane diol-1,4 et 65,7 g (0,56 mole) d'hexane diol-1,6.

La température est portée en 1 heure à 40°C sous balayage d'azote. La pression est réduite à 70 mm de mercure et la température maintenue à 70°C pendant 8 heures.

On obtient ainsi 350 g (rendement 94,3%) d'une huile incolore dont les caractéristiques sont les suivantes:

— taux d'hydroxyle: 3,29 eq/kg (calculé 3,0)
— taux de chlore hydrolysable: 0,15%
— taux de chlore total: 1,0%

Exemple 3

Cet exemple illustre la préparation d'un polycarbonate aliphatique triol selon la première variante de mise en oeuvre de l'invention. On prépare un mélange de 124,65 g (1,385 mole) de butane diol-1,4 et 131,6 g (1,115 mole) d'hexane diol-1,6.

On dissout 49,7 g (0,37 mole) de triméthylolpropane dans 40,7 g de ce mélange et ajoute goutte à goutte la solution obtenue dans 247,5 g (2,50 moles) de phosgène liquide en maintenant la température à −5°C. On ajoute ensuite lentement le reste du mélange de diols entre −5°C et 0°C.

La température est portée en 1 heure à 40°C sous balayage d'azote.

La pression est réduite à 70 mm de mercure et la température maintenue à 70°C pendant 8 heures.

On obtient ainsi 343 g (rendement 92,5%) d'une huile incolore dont les caractéristiques sont les suivantes:

— taux d'hydroxyle: 3,25 eq OH/kg (calculé 3,0)
— taux de chlore hydrolysable: 0,052% en poids
— taux de chlore total: 0,82% en poids.

Exemple 4

Cet exemple est un exemple comparatif dans lequel on prépare un polycarbonate aliphatique triol selon la technique de l'art antérieur.

On introduit en 2 heures, 297 g (3 moles) de phosgène gazeux dans un mélange de 59,65 g (0,445 mole) de triméthylol propane, 149,6 g (1,662 mole) de butane diol-1,4 et 157,9 g (1,338 mole) d'hexane diol-1,6 maintenu à 40—45°C.

Sous pression réduite (100 mm/hg) et sous balayage d'azote on porte en 3 heures la température de 40 à 60°C, puis en 4 heures de 60 à 150°C.

On obtient ainsi 446 g (rendement 83%) d'une huile incolore dont les caractéristiques sont les suivantes:

— taux OH: 4,94 eq/kg (calculé 3,0)
— taux de chlore hydrolysable: 0,01%
— taux de chlore total: 1,50%.

La comparaison des exemples 1, 2 et 3 avec l'exemple 4 fait ressortir que la technique selon l'invention permet d'obtenir la masse molaire souhaitée avec une bonne précision alors que la technique de l'art antérieur fait apparaître un gros écart entre la masse molaire théorique et la masse molaire trouvée. La relation entre la masse molaire M et le nombre d'équivalent x de groupes OH par kilogramme est en effet:

$$M = \frac{3000}{x}$$

Il apparait ainsi nettement que la technique de l'art antérieur n'a pas permis une réaction complète des fonctions OH du triméthylolpropane introduit.

Exemple 5

Cet exemple est un exemple comparatif dans lequel on compare la réactivité vis à vis de l'acide acrylique d'un polycarbonate aliphatique triol obtenu selon l'invention avec celle du même polycarbonate obtenu par transestérification au carbonate de diphényle selon la technique de la demande de brevet français n° 76.37196.

*Obtention du polycarbonate triol par phosgénation*

Les composés de départ sont du triméthylol-1,1,1 propane, de l'hexane diol-1,6 et du butane diol-1,4 dans des proportions telles qu'il y ait statistiquement une mole de triméthylolpropane par chaîne de polycarbonate, les proportions de diols étant telles que le polycarbonate obtenu soit équivalent à un mélange de 50% en masse de polycarbonate obtenu à partir du triméthylolpropane et de l'hexane diol seuls et de 50% en masse du polycarbonate obtenu à partir du triméthylolpropane et du butane diol seuls.

On transforme dans un premier temps la moitié de l'hexane diol et du butane diol en bis chloroformiates, on chasse le phosgène en excès, et on ajoute le triméthylolpropane dissout dans la quantité restante de l'hexane diol et de butane diol. On obtient un polycarbonate triol ayant les caractéristiques suivantes:
— taux de fonctions OH : 3,29 eq/kg
— masse molaire : 910
— chlore total : 1,04%
— chlore hydrolysable : 0,15%.

*Obtention du polycarbonate triol par transestérification*

A partir des mêmes polyols que précédemment on obtient par transestérification au carbonate de diphényle selon la technique de la demande de brevet français 76.37196 un polycarbonate triol ayant les caractéristiques suivantes:
— taux de fonctions OH : 3,25 eq/kg
— masse molaire : 920
— phénol total : 0,68%
— phénol libre : 0,55%

*Réactivité vis à vis de l'acide acrylique*

Dans un réacteur de un litre équipé d'un Dean Stark on place 200 g de polycarbonate triol obtenu par phosgénation, 52,5 g d'acide acrylique, 200 g de toluène, 0,2 g d'hydroquinone et 1,2 g d'acide sulfurique concentré. Après 3 heures et demie de reflux, on récupère 11 cm3 d'eau, ce qui correspond à un taux d'avancement de 93%. On recommence la même opération avec le polycarbonate obtenu par transestérification. Après 5 heures de reflux on observe un taux d'avancement de 74% seulement, ce taux étant calculé comme précédemment à partir de l'eau récupérée.

**Revendications**

1. Procédé de synthèse de polycarbonates hydroxytéléchéliques aliphatiques ou cycloaliphatiques, linéaires ou ramifiés, de masse molaire comprise entre 500 et 5000, par phosgénation directe d'un ou plusieurs polyols comportant 2 ou 3 fonction hydroxy par molécule, tout ou partie desdits polyols présentant une structure chimique dans laquelle un même atome de carbone est porteur d'au moins deux groupes méthylol, caractérisé en ce que les réactifs sont introduits de façon telle que lesdits polyols, présentant une structure chimique dans laquelle un même atome de carbone est porteur d'au moins deux groupes méthylol, se trouvent toujours soit en présence exclusivement de fonctions chloroformiates, soit en présence d'un excès de phosgène d'au moins 10% en moles par

rapport à la quantité stoechiométrique nécessaire à la transformation de toutes les fonctions hydroxy desdits polyols en fonctions chloroformiates.

2. Procédé selon la revendication 1, caractérisé en ce que l'on introduit, dans la charge de phosgène nécessaire pour l'ensemble de la réaction, les polyols à groupes méthylol adjacents, éventuellement dissouts dans une partie des autres polyols et/ou dans un solvant inerte, puis, lorsque tous les polyols à groupes méthylol adjacents sont transformés en chloroformiates, on introduit les autres polyols.

3. Procédé selon la revendication 1, caractérisé en ce que l'on fait réagir une partie des polyols, éventuellement dissouts dans un solvant, avec le phosgène à basse température de manière à former la quantité théorique nécessaire de chloroformiates, puis on élimine le phosgène en excès et on ajoute ensuite les autres polyols.

4. A titre de produits industriels nouveaux, les polycarbonates triols aliphatiques ou cycloaliphatiques liquides obtenus par le procédé de synthèse selon l'une quelconque des revendications 1 à 3.

**Claims**

1. Process for the synthesis of straight or branched chain aliphatic or cycloaliphatic hydroxytelechelating polycarbonates of molecular weight between 500 and 5000, by direct phosgenation of one or more polyols having 2 or 3 hydroxy functions per molecule, some or all of said polyols having a chemical structure in which a single carbon atom bears at least two hydroxymethyl groups, characterised in that the reagents are introduced in such manner that said polyols, having a chemical structure in which a single carbon atom bears at least two hydroxymethyl groups, are all the time either in the exclusive presence of chloroformate functions or in the presence of a 10% stoichiometric excess of phosgene above the amount necessary for converting all the hydroxy functions of said polyols into chloroformate functions.

2. Process according to claim 1, characterised in that polyols having adjacent hydroxymethyl groups, optionally dissolved in a portion of the other polyols and/or in an inert solvent, are introduced in the amount of phosgene necessary for the total reaction, and then when the polyols with adjacent hydroxymethyl groups have been converted to chloroformate (groups), the remaining polyols are added.

3. Process according to claim 1, characterised in that a portion of the polyols, optionally dissolved in a solvent, is reacted with the phosgene at low temperature so as to form the theoretically necessary amount of chloroformates, and then the excess phosgene is removed and the remaining polyols afterwards added.

4. As novel industrial products, liquid aliphatic or cycloaliphatic triol polycarbonates obtained by the synthetic process according to any one of claims 1 to 3.

**Patentansprüche**

1. Verfahren zur Synthese alifatischer oder cycloalifatischer, linearer oder verzweigter Polycarbonate mit endständigen OH-Gruppen und einem Molekulargewicht von 500 bis 5000 durch direkte Phosgenierung eines oder mehrerer Polyole mit zwei oder drei Oh-Gruppen pro Molekül, wobei die Gesamtheit oder ein Teil der Polyole eine chemische Struktur aufweist, bei der ein gleiches C-Atom mindestens zwei Methylolgruppen trägt, dadurch gekennzeichnet, dass die Reaktanten derart eingeführt werden, dass die Polyole, die eine chemische Struktur aufweisen, in der ein gleiches C-Atom mindestens zwei Methylolgruppen trägt, stets entweder in Gegenwart ausschliesslich von Chlorformiatfunktionen oder in Gegenwart eines Phosgenüberschusses von mindestens 10 mol-%, bezogen auf die zur Umwandlung sämtlicher OH-Funktionen dieser Polyole in Chlorformiatfunktionen erforderliche stöchiometrische Menge, vorliegen.

2. Verfahren nach Anspruch 1, dadurch gekennzeichnet, dass die Polyole mit benachbarten Methylolgruppen die gegebenenfalls in einem Teil der anderen Polyole und/oder in einem inerten Lösungsmittel gelöst sind, in die für die Umsetzung der Gesamtmenge erforderliche Phosgenmenge eingeführt und anschliessend die übrigen Polyole zugesetzt werden, wenn sämtliche Polyole mit benachbarten Methylolgruppen in Chlorformiate umgewandelt sind.

3. Verfahren nach Anspruch 1, dadurch gekennzeichnet, dass ein Teil der Polyole, der gegebenenfalls in einem Lösungmittel gelöst wird, bei niederer Temperatur mit Phosgen so umgesetzt wird, dass die theoretisch geforderte Menge an Chlorformiaten entsteht, anschliessend das überschüssige Phosgen abgetrennt wird und danach die übrigen Polyole zugesetzt werden.

4. Alifatische oder cycloalifatische flüssige Triol-polycarbonate, erhältlich nach dem Verfahren nach einem der Ansprüche 1 bis 3.